# EUROPEAN PATENT APPLICATION

(11) **EP 1 288 815 A1**
(43) Date of publication of application: **05.03.2003**
(21) Application number: 02019005.4
(22) Date of filing: 26.08.2002
(51) Int. Cl.: G06F 17/60

(54) **A method of providing a price quotation**

(30) Priority: 27.08.2001 US 940171
(71) Applicant: NEC CORPORATION, Tokyo (JP)
(72) Inventor: Ladd, Barton H., Santa Clara, California 95051 (US); Bagar, Mir M., Sunnyvale, California 94086 (US); Ellern, June S., Lake Oswego, Oregon 97034 (US); Fujita, Tadashi, Kawasaki, Kanagawa 211-0011 (JP); Iyer, Priya R., Fairfax, Virginia 22033-4291 (US); Ogura, Gaku, Kanagawa 238-0043 (JP); Yada, Akikazu, Tokyo, 156-0054 (JP); Yamamori, Nubuaki, Kanagawa (JP)
(74) Representative: VOSSIUS & PARTNER

(57) **Abstract**

A method is taught of providing a price quotation to a potential customer. The manufacturer can determine if the potential customer is a desirable customer. The manufacturer can determine if the potential customer is a potential competitor. The manufacturer can determine if the potential customer intends to use a product for an application other than the application for which the product was intended. If the potential customer is not a potential competitor the manufacturer can receive technical information from the potential customer and provide a price quotation for certain goods (or services). In an embodiment, the potential customer can initially contact the manufacturer through an electronic communication network. Another feature of the invention allows a manufacturer to provide a potential customer with a quote for goods or services and allows the potential customer to accept the quote, resulting in a contract for sale of the goods or services.

## Description

Portions of this patent application contain materials that are subject to copyright protection. The copyright owner has no objection to the facsimile reproduction by anyone of the patent document, or the patent disclosure, as it appears in the Patent and Trademark Office file or records, but otherwise reserves all copyright rights whatsoever.

Attached herewith as Appendix A is a CD-ROM (and duplicate) containing a single file. The file is titled "GA source code." The source code on the attached CD-ROM is herewith incorporated by reference for all purposes. Specifically, the copyright is reserved in the computer code within Appendix A.

This application relates to co-pending EP patent application Serial No. (our Ref.: G 2440 EP) filed on a date even herewith, entitled "Website for Facilitating a Transaction" naming Barton H. Ladd, Priya R. Iyer, June S. Ellern, Mir M. Baqar, Akikazu Yada, Gaku Ogura, Tadashi Fujita and Nobuaki Yamamori as inventors, which is assigned to the assignee of this application, the application being hereby incorporated herein by reference in its entirety.

This application relates to co-pending EP patent application Serial No. (our Ref.: G 2443 EP) filed on a date even herewith, entitled "Determining if a Potential Customer is a Desirable Customer" naming Barton H. Ladd, Priya R. Iyer, June S. Ellern, Mir M. Baqar, Akikazu Yada, Gaku Ogura, Tadashi Fujita and Nobuaki Yamamori as inventors, which is assigned to the assignee of this application, the application being hereby incorporated herein by reference in its entirety.

This application relates to co-pending EP patent application Serial No. (our Ref.: G 2368 EP) filed on a date even herewith, entitled "A Method of Facilitating a Design" naming Barton H. Ladd, Priya R. Iyer, June S. Ellern, Mir M. Baqar, Akikazu Yada, Gaku Ogura, Tadashi Fujita and Nobuaki Yamamori as inventors, which is assigned to the assignee of this application, the application being hereby incorporated herein by reference in its entirety.

This application relates to co-pending EP patent application Serial No. (our Ref.: G 2442 EP) filed on a date even herewith, entitled "A Method to Facilitate a Sale" naming Barton H. Ladd, Priya R. Iyer, June S. Ellern, Mir M. Baqar, Akikazu Yada, Gaku Ogura, Tadashi Fujita and Nobuaki Yamamori as inventors, which is assigned to the assignee of this application, the application being hereby incorporated herein by reference in its entirety.

The present invention relates to a method of facilitating a commercial transaction. More specifically the present invention relates to a method of providing a price quotation.

With the advent of the Internet, a wide array of information has become even more accessible to the average person. Entities distributing product information, either to the public or to other businesses have been assisted in their endeavor by networking and client/server technology that has become available in approximately the last ten to fifteen years. Such client/server technology typically allows a number of users employing client terminals to communicate with a remote server in order to transfer information.

To facilitate such transfers, client terminals can employ a "web" browser that provides access to a server via a graphical user interface (GUI). The server responds to requests from the client by providing information in the form of a "web page." One popular collection of servers uses Hypertext Transfer Protocol (HTTP) to provide information. This assemblage is known as the "World Wide Web" (WWW). A collection of related web pages is often referred to as a "website," or more simply a "site." The information is typically presented as web pages written as text with standardized formatting and control symbols known as Hypertext Mark-up Language (HTML).

The Internet allows a plurality of users employing client terminals communicating with a remote computer to transfer information. The proliferation of the Internet provides companies with the opportunity to quickly and efficiently communicate with potential purchasers. The Internet also allows the seller to quickly update prices offered to its customers to reflect market conditions. The Internet also allows a seller to offer certain prices to a specific customer or group of customers.

Purchasers increasingly provide specifications to a manufacturer prior to obtain a price quotation. For example, a manufacturer can use the information provided by the purchaser to design an integrated circuit. In another example, the manufacturer and potential customer can design an integrated circuit cooperatively. After receipt of the integrated circuit specification, the manufacturer can develop a price quotation.

For competitive reasons a company may limit the distribution of its prices and other sensitive data. Utilizing the communication facilities of the Internet a company can decide to allow a potential customer to obtain a price for a product but the vendor can decide not to make that information available to a competitor. With the rapid development of the Internet and Internet communications a manufacturer/ vendor can decide to accept specifications and provide a price quotation to selected customers, the transaction facilitated by the Internet.

Utilizing the Internet to exchange information with a potential purchaser enables certain other advantages. For example, the Internet can allow an exchange of information between a manufacturer and a potential customer. What is needed is a means to provide a price quotation to the customer based on information provided by the customer.

In accordance with the present invention, a method is taught of providing a price quotation to a potential customer. The method can include determining if the potential customer is a desirable customer. The potential customer provides identifying information (e.g., name, location, industry, etc.) to a manufacturer. The manufacturer can determine if the prospective customer is a potential competitor. If the customer is not a potential competitor the manufacturer can receive technical information from the potential customer and provide a price quotation for certain goods (or services). In an embodiment, the potential customer can initially contact the manufacturer through an electronic communication network such as the Intranet. Similarly, in an embodiment, the price quotation can be provided by the manufacturer to the potential customer over the same electronic communication network (the Internet) or another electronic communication network, such as a conventional telephone or an extranet.

In accordance with one feature of the invention, a design is prepared. The design can be prepared in cooperation between the manufacturer and the potential customer. Alternatively, a third party can be included to participate in a design function. According to another feature the potential customer can verify the design before any goods are manufactured.

In accordance with another feature, the potential customer can agree not to disclose technical information. This type of agreement is typically referred to as a non-disclosure agreement. According to this feature, the method does not proceed until a signed agreement is received from the potential customer.

In accordance with a feature of the invention the manufacturer can communicate with the potential customer and internal organizations (such as sales, marketing, engineering, marketing, etc.) as the method progresses. In addition each organization can communicate directly with another organization and each organization can communicate directly with the potential customer. The communications between organizations can be stored for future reference. Similarly, the communications between organizations and the customer can be stored for future reference.

In accordance with a feature of the invention, a customer can track work-in-progress after manufacturing has begun. The method can allow a customer to track goods shipped from the manufacturer to the customer. A feature also allows a customer to approve a sample received from the manufacturer.

Another feature of the invention allows a manufacturer to provide a potential customer with a quote for goods or services. According to this feature, the potential customer can accept or reject the quote. Accepting the quote results in a contract to sell the goods or services under discussion. The offer and acceptance can be communicated over an electronic communication network such as the Internet or an extranet.

The foregoing is a summary and this contains, by necessity, simplifications, generalizations and omissions of detail; consequently, those skilled in the art will appreciate that the summary is illustrative only and is not intended to be in any way limiting.

The present invention may be better understood, and its numerous objects, features and advantages made apparent to those skilled in the art by referencing the accompanying drawings. The use of the same reference number throughout the several figures designates a like or similar element.

FIG. 1 is a block diagram illustrating a network environment in which embodiments of the present invention may be practiced.

Figure 2 is a flow diagram of the method showing the logical steps of identifying a customer and a design module.

Figure 3 is a flow diagram of the method depicting additional logical steps of a front-end design, a back-end design and a customer verification of the design.

Figure 4A is a flow diagram of the method depicting the additional logical step of receiving a non-disclosure agreement ("NDA"). Figure 3B is a flow diagram of the method depicting the additional logical steps of archiving data and using data from previous transactions to facilitate developing a price quotation. Figure 3C is a flow diagram of the method depicting the additional logical steps of contact with sales personnel and communication for technical support.

Figure 5A is a flow diagram of the method depicting the additional logical steps of communication with the customer, sales, engineering and marketing. Figure 4B is a flow diagram of the method depicting the additional logical steps of work-in-progress tracking and sample approval.

Figure 6 is a flow diagram of the method including the logical step of the customer accepting the price offered.

Figure 7A and Figure 7B show an initial screen presentation suitable to execute the method disclosed.

Figure 8 shows a screen presentation suitable for informing a potential customer of the nature and function of the website

Figures 9A ― E shows a screen presentation suitable for use by a potential customer in is requesting a quote.

The following sets forth a detailed description of a mode for carrying out the invention. The description is intended to be illustrative of the invention and should not be taken to be limiting. A method is taught of providing a price quotation. The method can include determining if a potential customer is a desirable customer before providing the price quotation. The products for which prices are to be provided are not limited. Prices can be provided for any product, method, service, business or industry. A password can be provided to the customer to facilitate future transactions. The password can also allow the potential customer access to a manufacturer's electronic communications, such as an extranet.

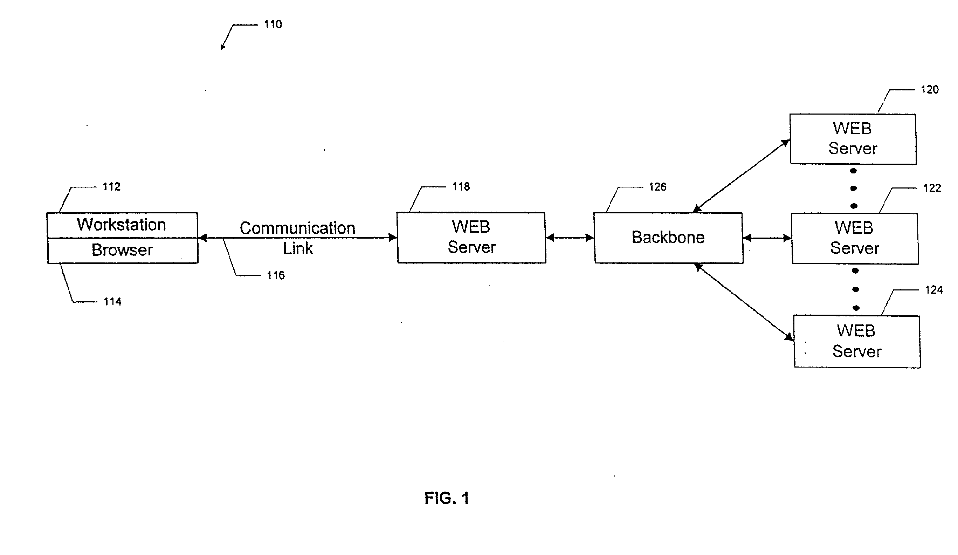

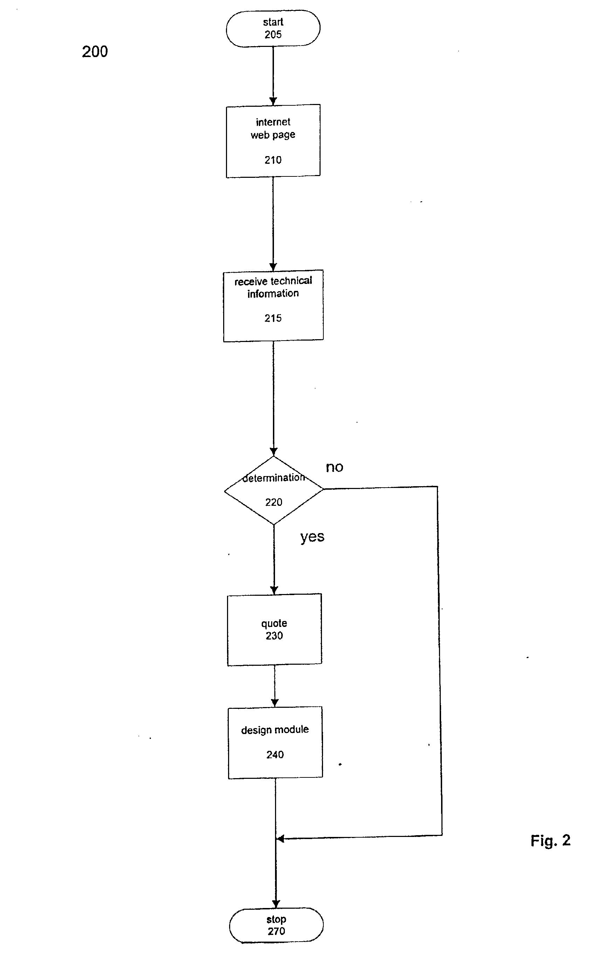

Figure 2 shows the logical steps of a method of determining if a potential customer is a desirable customer. A potential customer is a customer who contacts the vendor in order to obtain a price quotation for a product (or service). A potential customer can be a corporation, individual or other entity. A potential customer can contact the manufacturer by any conventional means such as fax, email, telephone, surface mail or through the website as previously discussed (refer to Figure 1). In the embodiment shown in Figure 2, the determination of whether a potential customer is a desirable customer can be made before a price is quoted to the potential customer. The products for which prices are to be provided are not limited. Prices can be provided for any product, method, service, business or industry. A password can be provided to the customer to facilitate future transactions. The password can also allow the potential customer access to a manufacturer's electronic communications, such as an extranet.

As shown in Figure 2, the process can begin with start 205. From start 205 a potential customer can logon to an Internet web page, 210. The web page can be provided, operated or maintained by a manufacturer or other vendor. (Hereinafter "manufacturer" is used to refer to a manufacturer, vendor or distributor of a good or service). At the web page a potential customer can enter certain information; such as name, address, phone number and individual contact name. In addition, the identifying information provided by a potential customer can include one or more of the following: business size, project name, password, or user identification number.

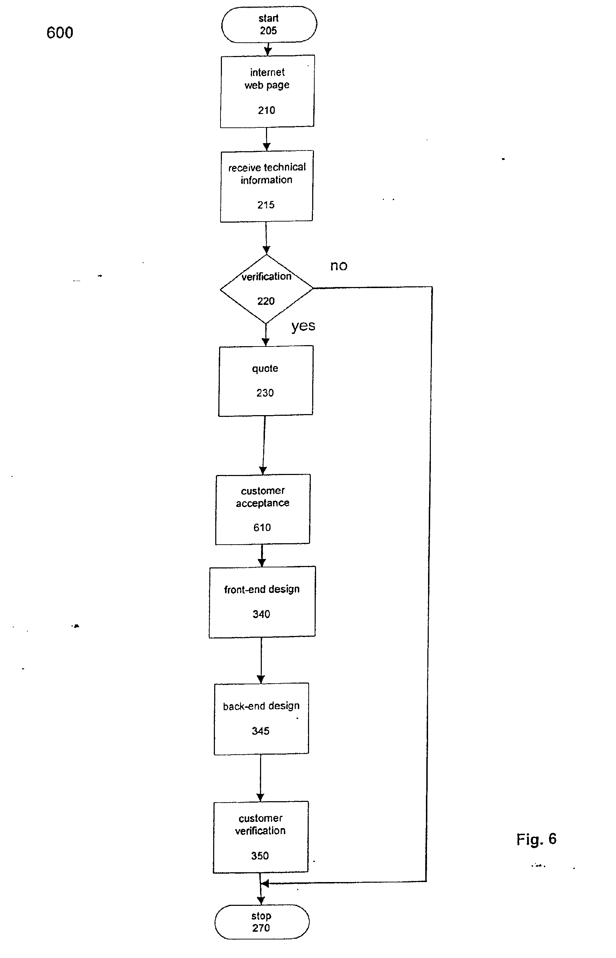

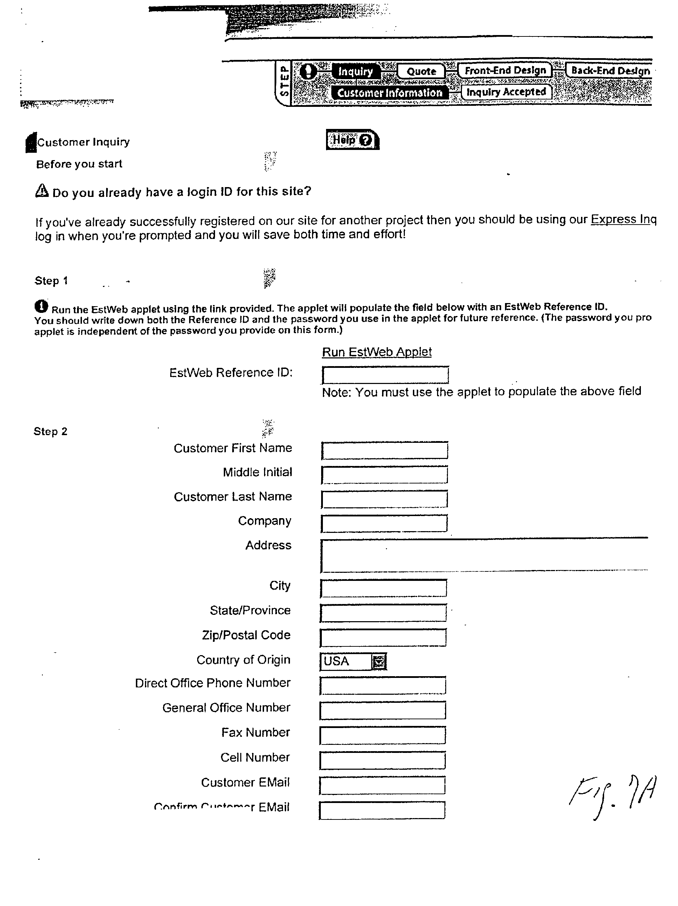

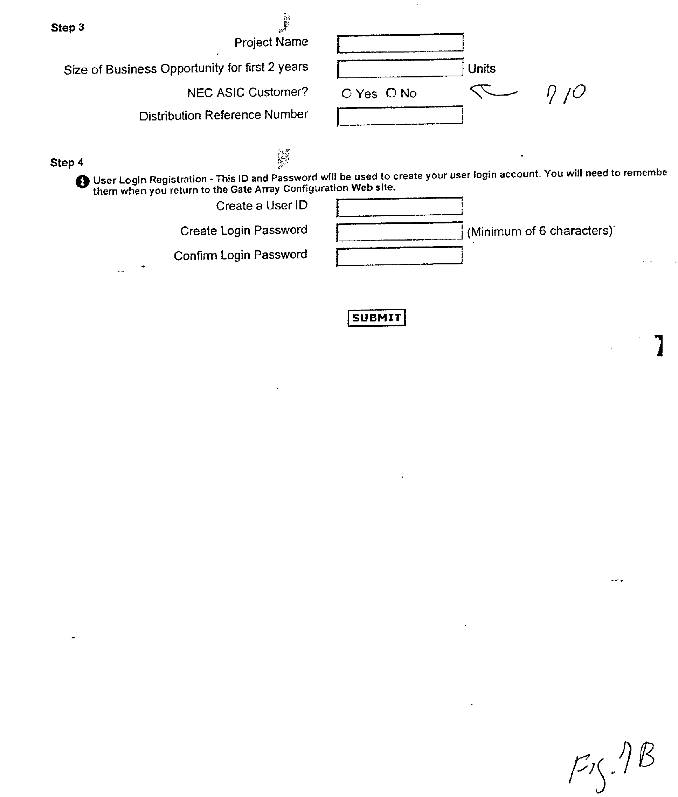

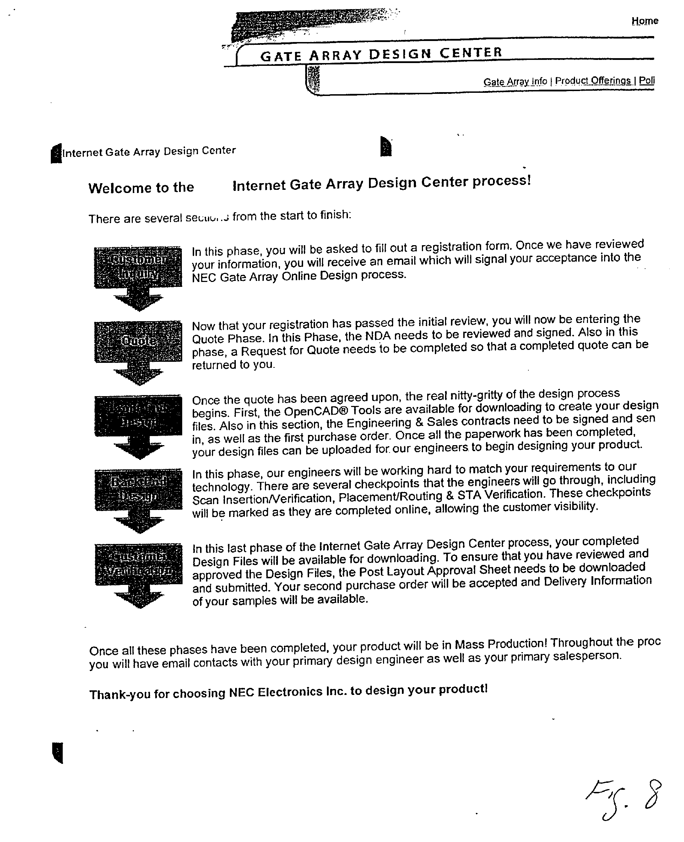

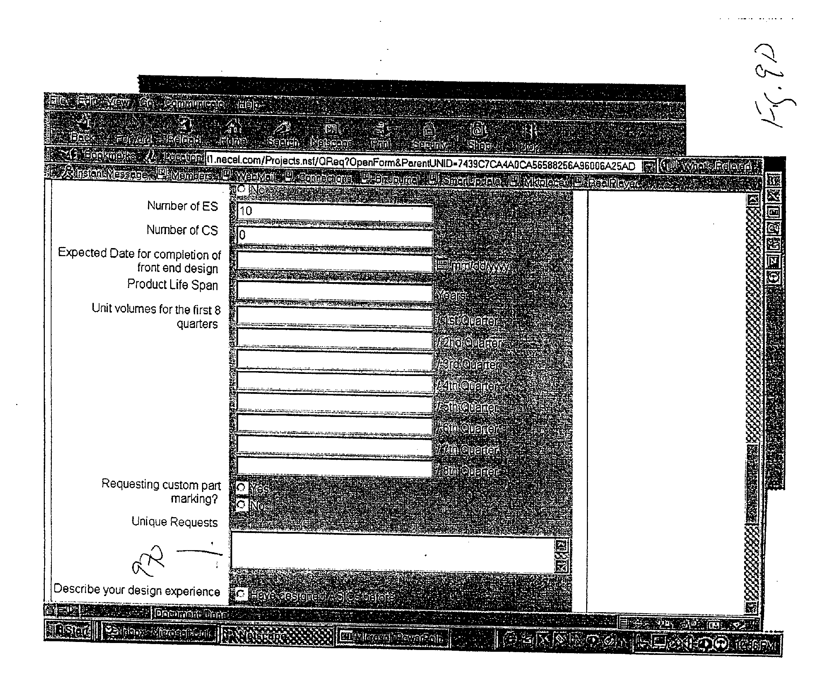

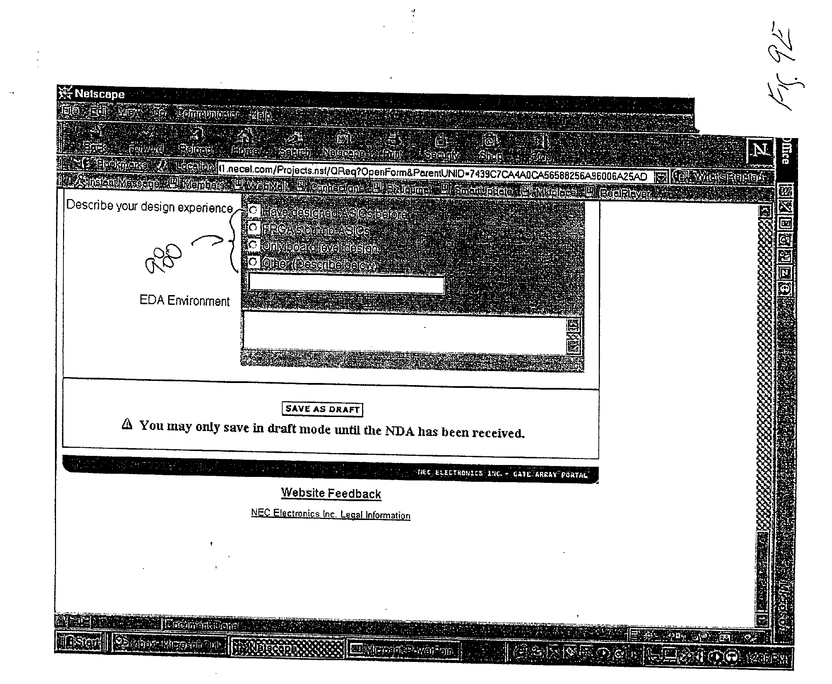

From Internet website 210 the method can proceed to receive technical information, 215. In a logical step denoted as receive technical information 215, a potential customer can provide technical data regarding a product for which the potential customer is interested in obtaining a price quotation. In an embodiment of the method (shown in Figure 6) the customer can be interested in obtaining a quote for goods or services. (Hereinafter "goods" refers to goods and services.) As discussed previously, the goods to be purchased are not limited to one industry but can include an integrated circuit such as a gate array. Examples of the type of technical information provided by the customer in logical step 215 are provided in Figure 7, as described further below. Additional technical information can be provided by the customer in Figure 9A-E, also described below.

From receive technical information 215 the method can proceed to determination, 220. At determination 220, the method determines if the potential customer is a desirable customer. In one embodiment the method compares the information entered on the web page to a list of competitors. If the information entered on Internet website 210 corresponds to a competitor, the method continues from determination 220 to stop, 270. If the information entered in Internet website 210 does not correspond to a competitor (or potential competitor) the method can proceed to design module 240. In an embodiment, after determining a potential customer is not a potential competitor a web master can route the query from the potential customer to a sales channel, such as direct sales or distribution. A direct sales channel can be an organization of employees of the manufacturer (or vendor). A distribution sales channel can be an independent company that purchases the manufacturer's (or vendor's) products for resale.

Determination 220 can determine if the potential customer plans to use the product in an application other than the product's intended application. For example, a manufacturer of integrated circuit chips may have a corporate policy preventing use of its chips in life-sustaining medical devices. Use of integrated circuit chips in life-sustaining medical devices typically requires a reliability far greater than the reliability suitable for many other applications. Under certain circumstances an integrated circuit chip with less than the desired reliability could result in the loss of life if incorporated in a medical device having a life sustaining application. Determination 220 can identify potential applications not compatible with the design of the integrated circuit (or other product) before providing a price quotation.

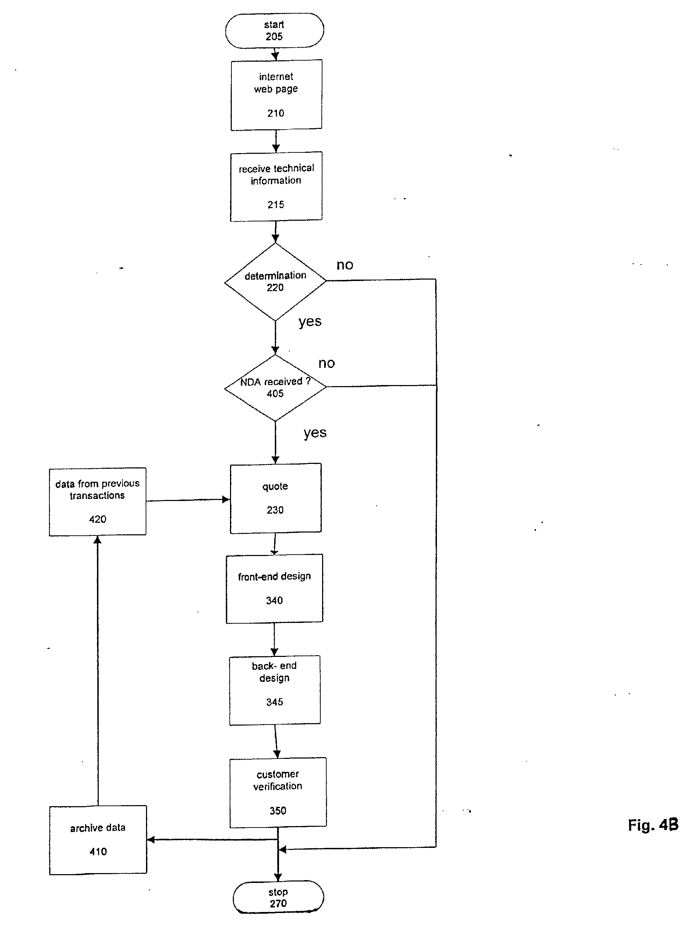

From determination 220 the method proceeds to quote, 230. In quote 230 the manufacturer provides a price quotation to the potential customer. The price quotation provided is calculated based on the technical information received in logical step 215. For example, if the product is in integrated circuit such as a gate array, the price quotation can consider the number of gates, macros, speed, package and power consumption of the chip. However, as discussed in Figure 4B, below, the price quotation can also depend on other factors, such as previous transactions between the manufacturer and the potential customer. In another example, the potential quantity ordered can be considered in developing the price quotation.

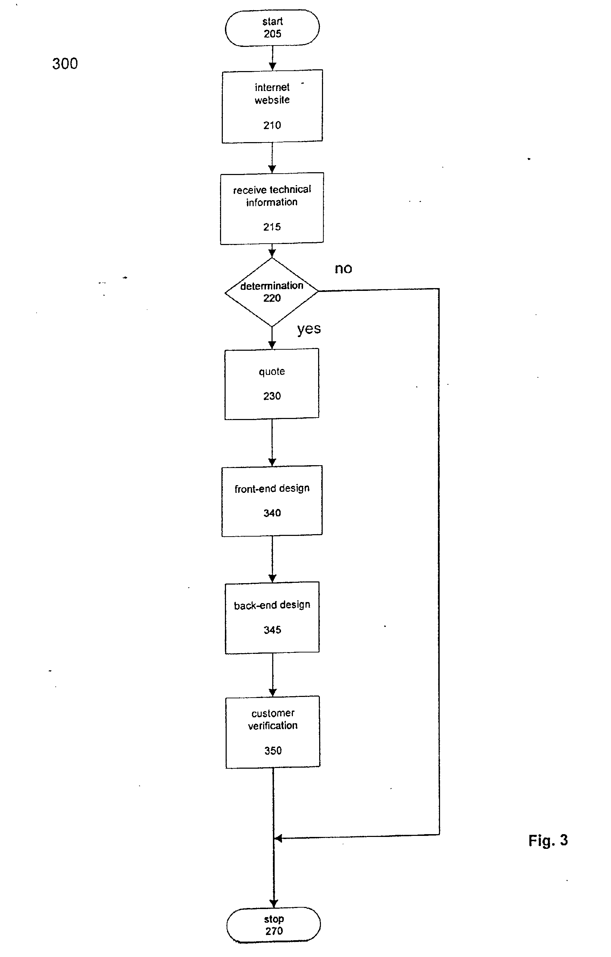

From quote 230 the method proceeds to design module 240. Design module 240 produces a design based on the information received from the potential customer. Design module 240 can produce a design by manual means, electronic design automation (EDA) tools, a combination of manual and EDA, or other means. In an embodiment further discussed in Figure 3, a design is cooperatively developed by the manufacturer and potential customer (hereinafter referred to simply as a "customer").

As mentioned in the preceding paragraph, a design can be produced by more than one entity. For example, a design can be cooperatively produced by a customer and a manufacturer. In one alternative (not shown), the design process can also include participation by a third party. Logical step 340 is shown in Figure 3 depicting a front-end design prepared by the customer. In an embodiment wherein the product under discussion is an integrated circuit such as a gate array a customer can use EDA tools provided by the manufacturer to prepare a front-end design of the gate array (or other integrated circuit). In an embodiment OpenCAD ® Tools are provided to the customer by the manufacturer. Typically the software tools can be downloaded by the customer over the Internet.

After the customer provides information defining the function of the integrated circuit the manufacturer or a third party can complete the design. In addition to the front-end design provided by a potential customer a back-end design is typically required for an integrated circuit. The back-end design can be completed by the manufacturer or a third party. Referring to Figure 3, back-end design 345 is shown. Back-end design 345 includes, but is not limited to, layout, placement and routing. Back-end design 345 formats the customer's design into the manufacturer's proprietary design.

These design steps can be performed by proprietary design tools or commercially available design tools such as Verilog originally designed by Gateway Design Automation in 1985. Other vendors of EDA tools are: Cadence Corporation, Providence, Rhode Island; Mentor Graphics, Oregon; Snyopsys, California; and Snytest Technologies, Inc. California.

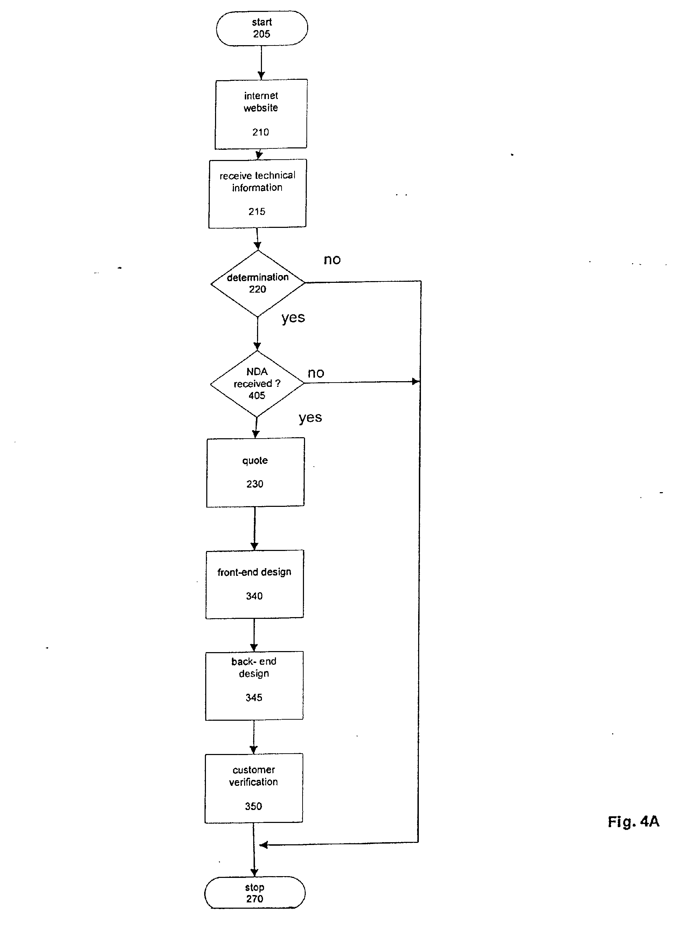

Figure 4A is a flow diagram of the method showing the additional logical step of receiving a non-disclosure agreement ("NDA"). An NDA is an agreement between the manufacturer and the potential customer. When approving an NDA the parties typically agree not to disclose confidential information provided by the other party. NDAs are common in technical industries such as the computer industries. NDAs facilitate business transactions by allowing parties to disclose technical information by lessening the concern that the technical information will be acquired or misappropriated by a competitor. In one possible configuration as shown in Figure 4A, the logical flow from determination 220 continues to NDA received 405 (not to quote 230 as previously shown in Figure 2).

After determining if an NDA has been received the method can proceed to either quote 230 or stop, 270. If an NDA has been received the logical method proceeds to quote 230 as indicated by the "yes" adjacent to logical step 405 in Figure 4A. If an NDA is not received, the method can proceed to stop 270 as indicated by the "no" adjacent to logical event 405 in Figure 4A.

From quote 230 the method proceeds to font-end design 340 shown in Figure 4A (and as previously discussed in Figure 3). From front-end design 340 the logical method proceeds to back-end design 345 as shown in Figure 4A (and as previously discussed in Figure 3). From back-end design 345 the logical method proceeds to customer verification, 350. Verification 350 allows completed design files to be verified by the customer. For example, the customer can verify the completed design to ensure that timing constraints have been satisfied. Subsequent to verifying the design a customer can provide a purchase order for a product to be manufactured. From customer verification 350 the method can proceed to stop, 270. In the alternative, other features of the method are further described in Figure 4B.

Figure 4B is a flow diagram of the method showing the additional logical step of archiving data, 410. From customer verification 350 (previously shown in Figure 4A) the method can proceed to archive data, 410. For example, communications with a potential customer can be archived. Storing the communication from the potential customer stating the type of product ordered and quantity of product ordered can be useful if a dispute arises. Still referring to Figure 4B, the method can proceed from archive data 410 to data from previous transactions, 420. Data from previous transactions 420 allows a manufacturer to recall certain data from earlier transactions (such as the quote offered) and base a quote on the data from the earlier transaction. From data from previous transactions 420 the method can proceed to quote 230 (as previously described in Figure 2.)

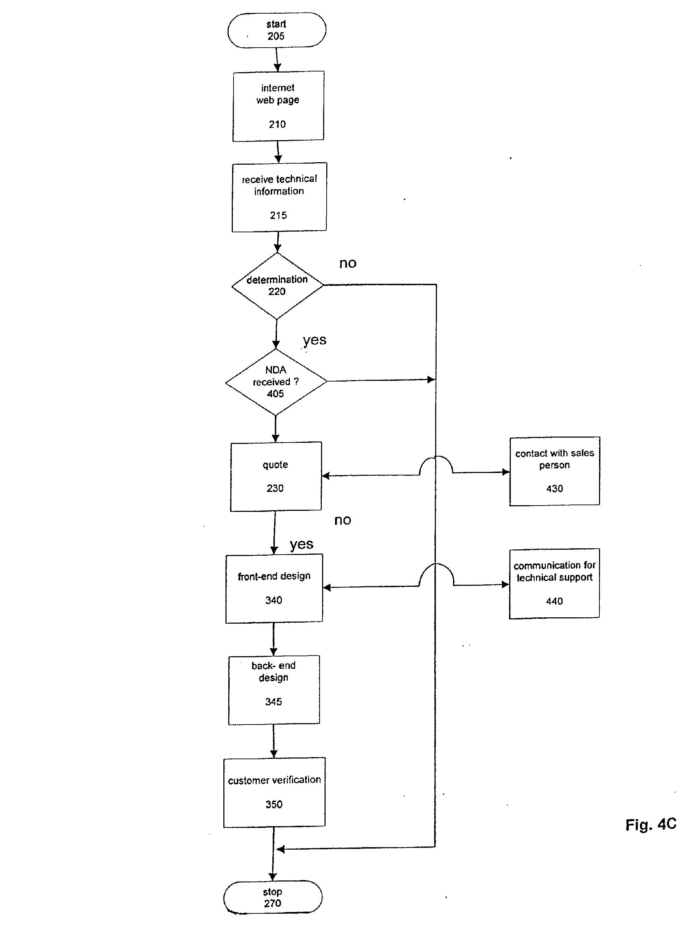

Figure 4C is a flow diagram of the method depicting the additional logical steps of contact with the sales organization and communication for technical support. Contact with sales organization 430 provides personnel associated with the manufacturer's sales organization sufficient information to provide a price quotation to the customer. For example, a customer may provide a specification for an integrated circuit including the number of gates required, speed, package size and macros. The marketing organization can then communicate with engineering and sales organizations to complete preparation of the price quote. In an embodiment the communication between the sales organization and customer can be through an electronic network, such as the Internet. In the alternative communication between the sales organization and customer can be though an electronic network such as the manufacturer's extranet.

Still referring to Figure 4C, communication for technical support 440 is shown. Communication for technical support 440 provides the customer with information or instructions to facilitate a customer using a manufacturer's EDA tools to execute a design. A customer can contact the engineering organization to determine the necessary specification to design and manufacture the product desired, such as an integrated circuit chip. In an embodiment the communication between the engineering organization and customer can be through an electronic network, such as the Internet. In the alternative communication between the engineering organization and customer can be though an electronic network such as the manufacturer's extranet.

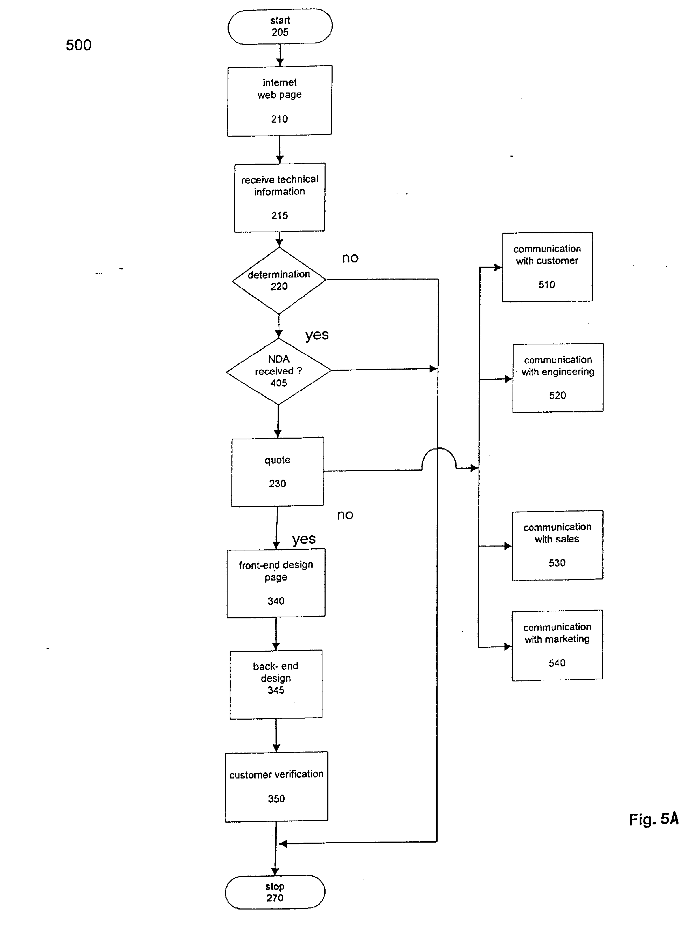

Figure 5A shows the logical steps of a method including communication with customer 510, communication with engineering 520, communication with sales 530 and communication with marketing, 540. Communication with customer 510 allows a manufacturer to notify a customer when the technical information submitted by the customer (refer to logical step 215) is acceptable to the manufacturer. Communication with engineering 520 allows a manufacturer to notify the manufacturer's engineering organization that sufficient technical information has been received from a customer to allow the customer to proceed to a design step. Communication with sales 530 allows a manufacturer to notify a sales organization that sufficient technical information has been received from a customer to allow the customer to proceed to a design step. Communication with marketing 540 allows a manufacturer to notify the marketing organization that sufficient technical information has been received to allow the customer to proceed to a design step. In an embodiment the communication between the manufacturing organization and customer can be through an electronic network, such as the Internet.

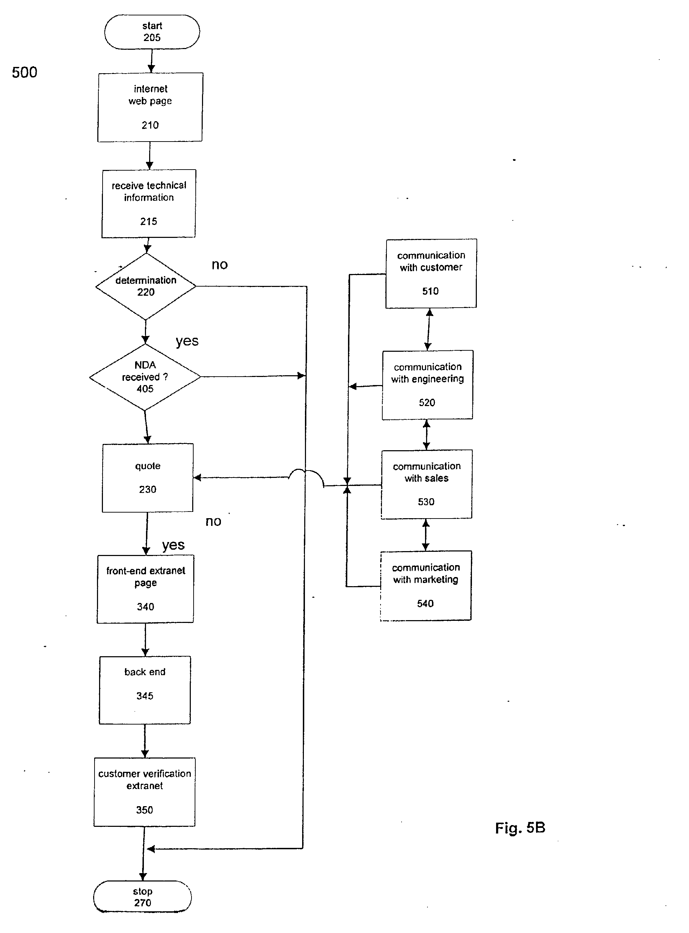

Figure 5B shows communication between the customer, engineering, sales and marketing. For example, as shown, the customer can communicate directly with engineering. Engineering can communicate directly with sales and the sales organization can communicate directly with marketing. Either party to the communication can initiate the communication. In an embodiment the communication between the sales organization and customer can be through an electronic network, such as the Internet. When these communications are electronic, such as over an extranet they can be archived for future reference.

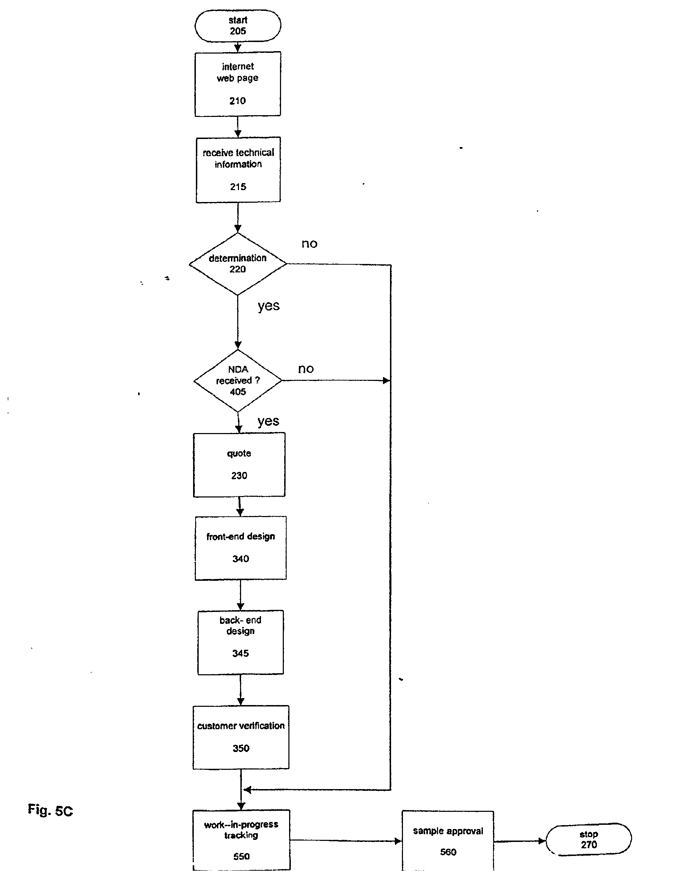

Figure 5C shows the logical steps of a method including work-in-progress tracking 550 and sample approval, 560. Work-in-progress tracking allows a customer to view the status of sample products in the manufacturing process. Work-in-progress tracking 550 can also allow a customer to monitor delivery of orders which have been shipped. Sample approval 560 allows a customer to evaluate a sample to determine if the sample product meets the customer' specifications. Again, these communications can be electronic, such as communications over the Internet or an extranet. When the customer verifies that a sample meets the specifications provided, the method is completed as shown by stop, 270 (previously shown in Figure 2).

Figure 6 shows the logical steps of a method including an offer and acceptance. As shown in Figure 6, offer 610 includes the information necessary to enter into a contract with a purchaser. For example, offer 610 can include the following terms; price, quantity and delivery date. Acceptance 620 indicates the customer's agreement of the terms offered in logical step 610. The method proceeds from offer 610 to acceptance 620 when the customer accepts the manufacturers offer. When the method proceeds from offer 610 to acceptance 620 as shown in Figure 6, a contract for sale results.

Figure 7A and Figure 7B show a web page suitable to execute the method disclosed. For example, in a configuration as shown in Figure 7A a customer can enter his company name and address including city, state and zip code. In addition as shown in Figure 7A a customer can enter contact phone numbers including direct office phone number, general office number, cell number and fax number. As shown in Figure 7B, a customer can enter a project name and the size of the customer's business. From the information gathered in Figure 7A and Figure 7B a potential manufacturer can determine the level of the customer's previous experience with the manufacturer. Format 710 allows a customer to communicate to the manufacturer the forecast demand for the product. From this forecast demand the manufacturer can decide whether or not to pursue the manufacture of the product.

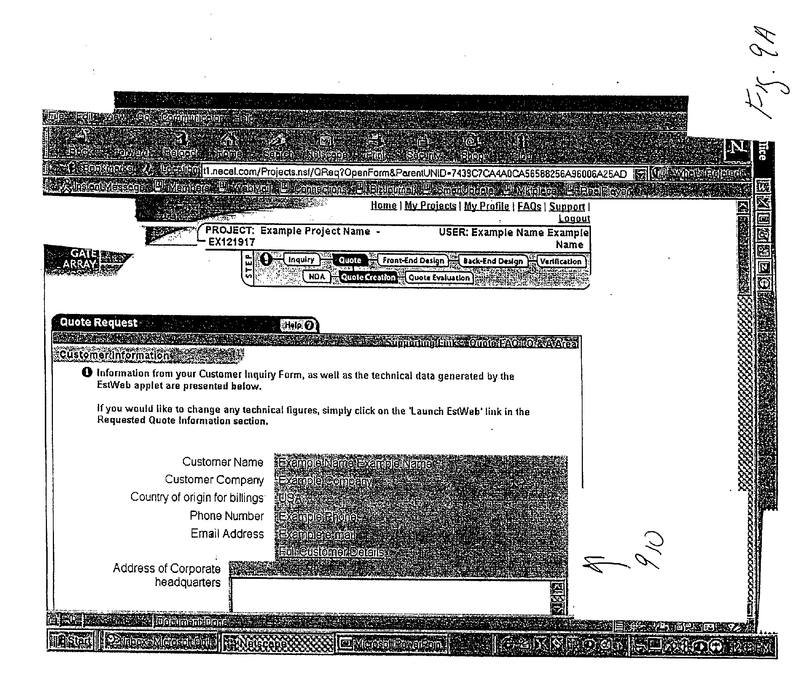

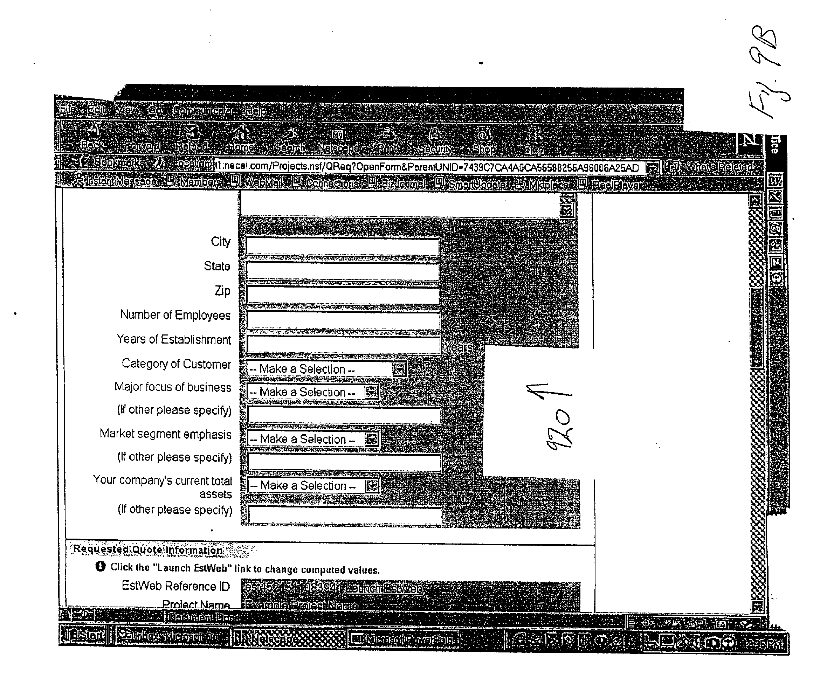

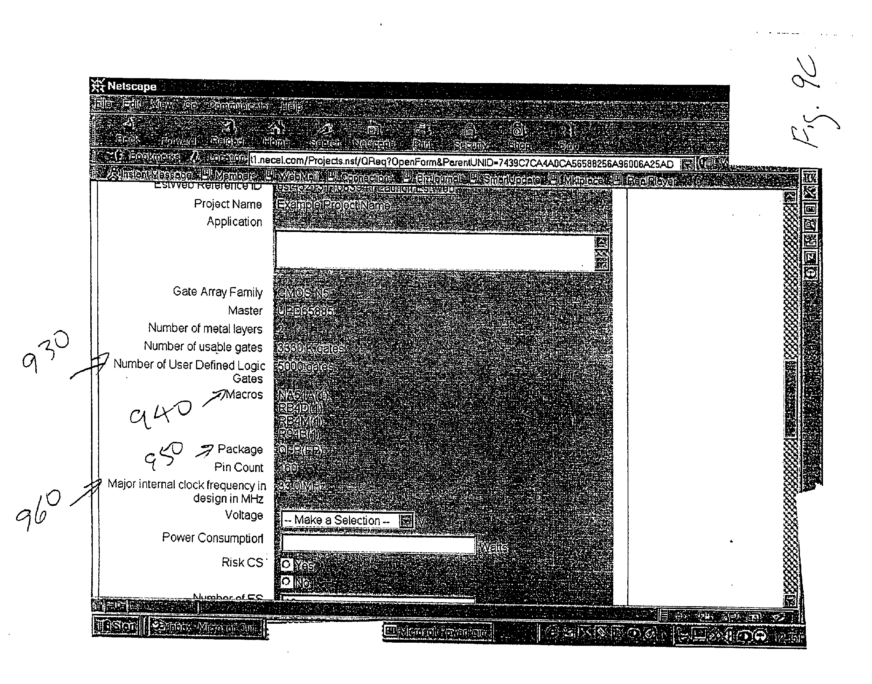

Figure 8 shows a web page suitable for informing a potential customer of the nature and function of the website. For example a function shown in Figure 8 refers to "customer inquiry." The function referred to as "customer inquiry" in Figure 8 has been referred to in greater detail as receive technical information 215 and verification 220 on Figure 2.

Figure 9A-E shows a screen presentation suitable for use by a potential customer in requesting a quote from a potential manufacturer. Figure 9A provides presentation 910 to enter the name of the potential customer. Figure 9B provides presentation 920 to enter the address of the potential customer. Figure 9C provides presentation 930 to enter the number of user defined gates, presentation 940 to enter the number and type of macros and presentation 950 to enter the package. (The package defines the physical interface between the die and the printed circuit board.) Figure 9C also provides presentation 960 to enter the major internal clock frequency, also known as the operating speed. Figure 9D allows a potential customer to enter a quantity forecast. The forecast quantity can be entered by the first quarter, second quarter, etc of a given year. Figure 9D also allows a potential customer to enter unique requests, 970. Figure 9E provides presentation 980 to allow a potential customer to inform the potential manufacturer of the customer's design experience.

### An embodiment

In an embodiment the prices provided are for integrated circuit chips. More specifically the product for which a manufacturer provides a price can be an integrated circuit chip known as a gate array. Gate arrays are a sea-of-gates with fixed pre-fabricated arrays. Pre-fabricated arrays are derived from a master die. Deriving a pre-fabricated array from a master die allows manufacture in large quantities. Manufacture in large quantity reduces prices.

Gate arrays are interconnected during the final metalization step in the fabrication process. Interconnecting gate arrays during the final metalization step is an efficient process. Therefore the gate arrays can be manufactured in less time and with less lead time than some other integrated circuit chips. Using a website to receive specifications and provide a price quotation further reduces the time required for a vendor to provide a finished product.

CMOS gate arrays can contain from 3,000 gates to 1.5 million gates. Gate arrays are power efficient. A website capable of providing a design-specific price quotation facilitates meeting this market demand for gate arrays and other integrated circuit chips.

The method disclosed is not restricted to a specific software, software language or software architecture. Each of the steps of the method disclosed may be performed by a module (e.g., a software module) or a portion of a module executing on a computer system. Thus, the above component organization may be executed on a laptop, desk top or other computer system. The method may be embodied in a machine-readable and/or computer-readable medium for configuring a computer system to execute the method. Thus, the software modules may be stored within and/or transmitted to a computer system memory to configure the computer system to perform the functions of the module.

It is appreciated that operations discussed herein may include, for example, directly entered commands by a computer system user, steps executed by application specific hardware modules, steps executed by software modules, or combinations thereof.

The software modules discussed herein which perform the described steps may include script, batch or other executable files, or combinations and/or portions of such files. The software modules may include software code as well as data and may be encoded on computer-readable media.

Additionally, those skilled in the art will recognize that the boundaries between modules are merely illustrative'and alternative embodiments may merge modules or impose an alternative decomposition of functionality of modules. For example, the modules discussed herein may be decomposed into submodules to be executed as multiple computer processes, and, optionally, on multiple computers. Moreover, alternative embodiments may combine multiple instances of a particular module or submodule. Furthermore, those skilled in the art will recognize that the operations described herein are for illustration only. Operations may be combined or the functionality of the operations may be distributed in additional operations in accordance with the invention.

The operations described above and modules therefor may be executed on a computer system configured to execute the operations of the method and/or may be executed from computer-readable media. The method may be embodied in a machine-readable and/or computer-readable medium for configuring a computer system to execute the method. Alternatively, such actions may be embodied in the structure of circuitry that implements such functionality, such as the micro-code of a complex instruction set computer (CISC), firmware programmed into programmable or erasable/programmable devices, the configuration of a field-programmable gate array (FPGA), the design of a gate array or full-custom application-specific integrated circuit (ASIC), or the like.

While particular embodiments of the present invention have been shown and described, it will be obvious to those skilled in the art that, based upon the teachings herein, changes and modifications may be made without departing from this invention and its broader aspects. Therefore, the appended claims are to encompass within their scope all such changes and modifications as are within the true spirit and scope of this invention.

## Claims

1. A method of providing a price quotation, comprising:
providing an Internet website;
receiving information from the potential customer;
determining if a potential customer is a desirable customer, wherein determining if a potential customer is a desirable customer is based on information received from the potential customer; and
providing a price quotation to the potential customer.

2. The method as recited in claim 1, wherein the price quotation is communicated to the potential customer over the Internet.

3. The method as recited in claim 1 or 2, wherein information is received from the potential customer over the Internet.

4. The method as recited in claim 1, 2, or 3, further comprising:
receiving a front-end design from a potential customer.

5. The method as recited in claim 1, 2, 3, or 4, wherein determining if the potential customer is a desirable customer includes determining if the potential customer is a potential competitor.

6. The method as recited in claim 1, 2, 3, 4, or 5, wherein determining if the potential customer is a desirable customer includes determining if the intended application of the product is an application other than the application for which the product is intended.

7. The method as recited in claim 1, 2, 3, 4, 5, or 6, wherein the product for which the price is quoted is an integrated circuit.

8. The method as recited in any one of claims 1 to 7, wherein the product for which the price is quoted is a gate array integrated circuit.

9. The method as recited in any one of claims 1 to 8, further comprising:
receiving a non-disclosure agreement ("NDA").

10. A computer program product, encoded in computer readable media, comprising:
a set of instructions configured to provide an Internet website;
a set of instructions configured to receive information from the potential customer;
a set of instructions configured to determine if the potential customer is a desirable customer, wherein determining if the potential customer is a desirable customer is based on the information received from the customer; and,
a set of instructions configured to provide a price quotation the potential customer.

11. The computer program product as recited in claim 10, further comprising:
a set of instructions configured to receive a front-end design from a potential customer.

12. The program product as recited in claim 10 or 11, further comprising:
a set of instructions configured to receive a non-disclosure agreement from the potential customer, wherein if the non-disclosure agreement is not received the method stops.

13. The program product as recited in claim 10, 11 or 12, wherein the price quotation is communicated to the potential customer over the Internet.

14. The program product as recited in claim 10, 11, 12 or 13, wherein the product for which a price is quoted is an integrated circuit.

15. The computer program product as recited in claim 10, 11, 12, 13 or 14, wherein the product for which a price is quoted is a gate array integrated circuit.

16. The program product as recited in claim 10, 11, 12, 13, 14 or 15, comprising:
a set of instructions configured to receive an NDA from the potential customer.

17. A method of obtaining a price quotation for a product, comprising:
accessing an Internet website;
providing technical information to a potential manufacturer;
providing identifying information, wherein the identifying information is communicated from a potential customer to a potential manufacturer;
receiving a price quotation from the potential manufacturer.

18. The method as recited in claim 17, further comprising:
providing a front-end design.

19. The method as recited in claim 17 or 18, wherein the product is a gate array integrated circuit.

20. The method as recited in claim 17, 18 or 19, wherein the technical information provided to the potential manufacturer is transmitted over the Internet.

21. The method as recited in claim 17, 18, 19 or 20 wherein the price quotation is requested over the Internet.

22. The method as recited in claim 17, 18, 19, 20 or 21, wherein the price quotation is received over the Internet.

23. The method as recited in claim 17, 18, 19, 20, 21 or 22, further comprising:
providing a non-disclosure agreement to the potential manufacturer.

24. A computer system, comprising:
a processor;
a memory coupled to the processor;
a computer program product, encoded in computer readable media, further comprising:
a set of instructions configured to provide an Internet website;
a set of instructions configured to receive information from a potential customer;
a set of instructions configured to determine if a potential customer is a desirable customer, wherein determining if the potential customer is a desirable customer is based on information received from the potential customer; and
a set of instructions configured to provide a price quotation to the potential customer.

25. The computer system as recited in claim 24, wherein information is received from the potential customer over the Internet.

26. The computer system as recited in claim 24 or 25, wherein the price quotation is communicated to the potential customer over the Internet.

27. The system as recited in claim 24, 25 or 26, comprising:
a set of instructions configured to receive a front-end design from a potential customer.

28. The system as recited in claim 24, 25, 26 or 27, comprising:
a set of instructions configured to receive a non-disclosure agreement from the potential customer, wherein if the non-disclosure agreement is not received, the method stops.

29. The computer system as recited in claim 24, 25, 26, 27 or 28, wherein the price quotation is provided for a gate array integrated circuit.

30. An integrated circuit sold by a method, the method comprising:
providing an Internet website;
receiving information from a potential customer;
determining if a potential customer is a desirable customer, wherein determining if the potential customer is a desirable customer is based on information received from the potential customer;
providing a price quotation to the potential customer, wherein the price quotation constitutes an offer for sale; and
receiving an acceptance from a potential customer of the price quoted.

31. The integrated circuit as recited in claim 30, wherein the design is based on information received from the potential customer over the Internet.

32. The circuit as recited in claim 30 or 31, wherein information is received from the potential customer over the Internet.

33. The circuit as recited in claim 30, 31 or 32, wherein the price quotation is communicated to the potential customer over the Internet.

34. The circuit as recited in claim 30, 31, 32 or 33, wherein determining of the potential customer is a desirable customer includes determining if the potential customer is a potential competitor.

35. The circuit as recited in claim 30, 31, 32, 33 or 34, wherein determining if the potential customer is a desirable customer includes determining if the intended application of the product for which a price quote is to be provided is an application other than the application for which the product is intended.

36. The circuit as recited in claim 30, 31, 32, 33, 34 or 35, wherein integrated circuit is a gate array integrated circuit.

37. The circuit as recited in claim 30, 31, 32, 33, 34, 35 or 36, wherein the method further comprises:
receiving a front-end design from the potential customer.

38. The circuit as recited in any one of claims 30 to 37, wherein the method further comprises:
receiving a non-disclosure agreement from the potential customer.

39. A computer system, comprising:
a processor,
a memory operably coupled to the processor; and
an integrated circuit, wherein the integrated circuit is manufactured by a method, the method comprising:
providing an Internet website;
receiving information from a potential customer;
determining if the potential customer is a desirable customer, wherein determining of the potential customer is a desirable customer is based on the information received from the potential customer;
providing a price quotation to the potential customer, wherein the price quotation constitutes an offer for sale; and
receiving an acceptance from a potential customer of the price quoted.

40. The computer system as recited in claim 39, wherein the design of the integrated circuit is based on information received from the potential customer over the Internet.

41. The computer system as recited in claim 39 or 40, wherein determining if the potential customer is a desirable customer is based on information received from the potential customer over the Internet.

42. The computer system as recited in claim 39, 40 or 41, wherein determining if the potential customer is a desirable customer includes determining if the potential customer is a potential competitor.

43. The computer system as recited in claim 39, 40, 41 or 42, wherein determining if the potential customer is a desirable customer includes determining if the intended application of the product for which a price quote is to be provided is an application other than the application for which the product is intended.

44. The computer system as recited in claim 39, 40, 41, 42 or 43, wherein the product for which the price is quoted is a gate array integrated circuit.

45. A system for providing a price quotation, comprising:
means to provide an Internet website;
means to receive information from the potential customer;
means to determine if a potential customer is a desirable customer, wherein determining if a potential customer is a desirable customer is based on information received from the potential customer; and
means to provide a price quotation to the potential customer.

46. The system as recited in claim 45, wherein the price quotation is communicated to the potential customer over the Internet.

47. The system as recited in claim 45 or 46, wherein information is received from the potential customer over the Internet.

48. The system as recited in claim 45, 46 or 47, further comprising:
means to receiving a front-end design from a potential customer.

49. The system as recited in claim 45, 46, 47 or 48, wherein determining if the potential customer is a desirable customer includes determining if the potential customer is a potential competitor.

50. The system as recited in claim 45, 46, 47, 48 or 49, wherein determining if the potential customer is a desirable customer includes determining if the intended application of the product is an application other than the application for which the product is intended.

51. The system as recited in any one of claims 45 to 50, wherein the product for which the price is quoted is an integrated circuit.

52. The system as recited in any one of claims 45 to 51, wherein the product for which the price is quoted is a gate array integrated circuit.

53. The system as recited in any one of claims 45 to 52, further comprising:
means to receive a non-disclosure agreement ("NDA"),
